# FASCICULE DE BREVET EUROPEEN

(11) **EP 4 124 608 B1**
(45) Date de publication et mention de la délivrance du brevet: **10.07.2024**
(21) Numéro de dépôt: 22185712.1
(22) Date de dépôt: 19.07.2022
(51) Int. Cl.: C04B 7/36, C04B 14/26, C04B 14/28, C04B 20/02, C04B 22/10, C04B 40/02

(54) **PROCÉDÉ DE FORMATION D'UN PRODUIT FINAL À PARTIR DE CARBONATE DE CALCIUM ET D'UNE AUTRE ESPÈCE**
VERFAHREN ZUR BILDUNG EINES ENDPRODUKTS AUS KALZIUMKARBONAT UND EINER ANDEREN SUBSTANZ
METHOD FOR FORMING A FINAL PRODUCT FROM CALCIUM CARBONATE AND ANOTHER SPECIES

(30) Priorité: 30.07.2021 FR 2108341
(43) Date de publication de la demande: 01.02.2023
(73) Titulaire: Welya, 60600 Agnetz (FR)
(72) Inventeur: PONS Y MOLL, Olivier, 60600 AGNETZ (FR)
(74) Mandataire: IP Trust

(56) Documents cités:
- WO-A2-2007/002792
- CN-A- 106 587 667

## Description

### DOMAINE DE L'INVENTION

L'invention concerne un procédé de formation d'un produit final à partir de carbonate d'alcalin ou d'alcalino-terreux et d'une autre espèce.

En particulier, le procédé selon la présente invention propose de calciner du carbonate d'alcalin ou d'alcalino-terreux dans une chambre de calcination dans laquelle l'atmosphère gazeuse est préalablement établie à une pression faible et notamment inférieure à 1 Atm, voir inférieure à 0,1 Atm.

Par ailleurs, la calcination est exécutée au moyen d'un chauffage radiatif de manière à limiter les apports de matière et ainsi former du dioxyde de carbone relativement exempt d'impuretés.

Ces différents aspects ouvrent la voie à une valorisation du CO₂ et permettent ainsi d'en limiter les impacts environnementaux.

Le procédé selon la présente invention est avantageusement mis en œuvre pour la formation d'un clinker de ciment ou la formation d'un verre.

### ARRIERE PLAN TECHNOLOGIQUE DE L'INVENTION

Un procédé de formation de ciment connu de l'état de la technique implique le chauffage d'un mélange composé de calcaire (CaCO₃) et d'argile. En particulier, lors de l'exécution du procédé de formation de ciment, le mélange est introduit dans un four rotatif et est porté à une température supérieure à 1450°C, et plus particulièrement comprise entre 1500°C et 1600°C, afin de former un clinker de ciment.

Toutefois, ce procédé de formation, du fait des réactions mises en oeuvre, génère des quantités de dioxyde de carbone (CO₂) relativement importantes et incompatibles avec la tendance générale visant à réduire les émissions de gaz à effet de serre.

Notamment, la décarbonatation du calcaire (calcination), qui intervient dans le four rotatif dès lors que la température est supérieure à 800°C, est la principale source d'émissions de CO₂ des procédés de formation de ciment.

Afin de pallier ce problème, et ainsi limiter les émissions de CO₂ lors de la formation de ciment, il a été proposé dans le document FR2961505 de considérer un mélange qui par sa composition émet moins de CO₂. En particulier, ce mélange considéré dans ce document présente une quantité de calcaire réduite.

Néanmoins, lors de la mise en oeuvre de ce procédé, les émissions de CO₂ restent conséquentes, et ne peuvent répondre de manière durable aux exigences en termes de réduction des émissions de gaz à effet de serre.

De manière alternative, et tel que décrit dans le document EP3656750, il est possible de séquestrer le dioxyde de carbone susceptible d'être formé lors de la calcination du calcaire. Toutefois, le procédé proposé dans ce document conduit également à la formation de quantités importantes de CO₂. Par ailleurs, et du fait des impuretés présentes, la valorisation de CO₂ formé reste compliquée et coûteuse à mettre en oeuvre.

Toujours de manière alternative, et tel que divulgué dans le document EP1879693, il est possible de faire recirculer le dioxyde de carbone produit lors de la calcination du calcaire. L'énergie thermique de dioxyde de carbone, formé à haute température, peut notamment être utilisée pour sécher le carburant, notamment le carburant solide, nécessaire au chauffage du four rotatif, et ainsi améliorer le rendement énergétique du procédé de formation du ciment. Toutefois, les quantités CO₂ produites dans le cadre de ce procédé restent encore trop importantes.

Le document WO 2007/002792 A2 porte sur l'élimination sélective du dioxyde de carbone par réaction avec des oxydes métalliques tels que l'oxyde de calcium, résultant en la formation de carbonate de calcium. Le carbonate de calcium est ensuite régénéré par calcination pour retrouver de l'oxyde de calcium.

Le document CN 106 587 667 A porte sur un procédé de fabrication de chaux active par calcination de calcaire sous vide à des températures allant de 720 à 750°C et des pressions allant de 10⁻² à 10⁻³ Pa, dans le but d'améliorer le degré d'activité de la chaux obtenue tout en procédant à des températures inférieures aux températures usuelles. Pour atteindre ces pressions, le calcaire est chargé dans des enceintes successives de pressions de plus en plus faibles, jusqu'à arriver à un four rotatif où la calcination est opérée.

Un but de la présente invention est donc de proposer un procédé de formation d'un produit final impliquant la calcination d'un carbonate d'alcalin ou d'alcalino-terreux et pour lequel les émissions de CO₂ sont réduites au regard des procédés connus de l'état de la technique.

Un autre but de la présente invention est également de proposer un procédé de formation d'un produit final impliquant la calcination d'un carbonate d'alcalin ou d'alcalino-terreux et pour lequel le CO₂ produit lors de la calcination est aisément récupéré sans procédé de séparation à des fins de valorisation.

### BREVE DESCRIPTION DE L'INVENTION

Les buts de la présente invention sont, au moins en partie, atteints par un procédé de formation d'un produit final à partir de carbonate d'alcalin ou d'alcalino-terreux, dit carbonate, et d'une autre espèce, dans lequel le carbonate comprend du carbonate de calcium de sorte que l'espèce intermédiaire comprend de l'oxyde de calcium et l'autre espèce comprend de l'argile, le procédé comprenant les étapes suivantes :
b) un traitement thermique du carbonate, dans une chambre de calcination, destiné à calciner ledit carbonate en oxyde d'alcalin ou d'alcaline terreux, dit espèce intermédiaire, et en dioxyde de carbone ;
c) une étape d'extraction du dioxyde de carbone produit lors de l'exécution de l'étape b) ;
d) une étape finale qui comprend le mélange de l'espèce intermédiaire et de l'autre espèce afin de former le produit final ;

le procédé étant remarquable en ce que le traitement thermique est précédé d'une étape a) de pompage de l'atmosphère gazeuse dans la chambre de calcination de manière à maintenir la pression gazeuse dans ladite chambre de calcination à une pression inférieure à 1 atmosphère, avantageusement inférieure à 0,1 atmosphère, encore plus avantageusement inférieure à 0,05 atmosphère, et en ce que l'énergie nécessaire à l'exécution de l'étape b) est apportée par une source radiative à travers une fenêtre de la chambre de calcination, procédé dans lequel l'étape a) est poursuivie après le démarrage de l'étape b) et tant que la température dans la chambre de calcination reste inférieure à une température prédéterminée, la température prédéterminée est comprise entre 200°C et 600°C, plus avantageusement la température prédéterminée est comprise entre 300°C et 500°C,
et dans lequel l'étape a) prend fin dès lors que la température dans la chambre de calcination (11) est supérieure à la température prédéterminée.

Selon un mode de mise en oeuvre, l'étape c) débute lors de l'exécution de l'étape b) et dès que la température dans la chambre de calcination est supérieure à la température prédéterminée.

Selon un mode de mise en oeuvre, le dioxyde de carbone extrait lors de l'étape c) est stocké ou transformé en un produit de valorisation.

Selon un mode de mise en oeuvre, l'apport d'énergie par la source radiative comprend la concentration, par au moins un miroir réfléchissant et à concentration, d'un rayonnement lumineux, notamment un rayonnement solaire, en direction de la chambre de calcination.

Selon un mode de mise en oeuvre, la calcination du carbonate de calcium au cours de l'étape b) est exécutée à une température comprise entre 400°C et 1000°C, avantageusement entre 800°C et 1000°C.

Selon un mode de mise en oeuvre, le produit final comprend un clinker de ciment.

Selon un mode de mise en oeuvre, l'étape d) est suivie d'une étape e) de traitement thermique final du mélange, le traitement thermique final étant exécuté à une température comprise entre 1000°C et 1600°C.

Selon un mode de mise en oeuvre, le dioxyde de carbone extrait de la chambre de calcination est injecté, avant son stockage, dans un échangeur de chaleur afin de chauffer, par échange de chaleur, un fluide d'échange.

Selon un mode de mise en oeuvre, le fluide d'échange chauffé est injecté dans un module de préchauffage destiné à préchauffer l'espèce intermédiaire formée dans la chambre de calcination et l'autre espèce.

L'invention concerne également une installation pour la formation d'un produit final à partir d'un carbonate d'alcalin ou d'alcalino-terreux, dit carbonate, et d'une autre espèce, l'installation comprenant :
- une chambre de calcination, pour la calcination de carbonate en oxyde d'alcalin ou d'alcalino-terreux, dit espèce intermédiaire, et en dioxyde de carbone, faite de brique réfractaire et pourvue d'une fenêtre transparente ;
- un moyen de pompage configuré pour pomper l'atmosphère gazeuse dans la chambre de calcination de manière à maintenir la pression gazeuse dans ladite chambre de calcination à une pression inférieure à 1 atmosphère, avantageusement inférieure à 0,1 atmosphère, encore plus avantageusement inférieure à 0,05 atmosphère ;
- un moyen de chauffage radiatif configuré pour apporter l'énergie nécessaire à la calcination du carbonate à travers la fenêtre transparente ;
- un moyen d'extraction configuré pour extraire le dioxyde de carbone formé lors de la calcination du calcaire dans la chambre de calcination.
- un moyen de stockage destiné à stocker le dioxyde de carbone formé dans la chambre de calcination et extrait par le moyen d'extraction ;
- un moyen de mélange de l'autre espèce avec l'espèce intermédiaire formé dans la chambre de calcination.

Selon un mode de mise en oeuvre, le moyen de chauffage radiatif comprend au moins un miroir réfléchissant parabolique configuré pour concentrer des rayonnements lumineux, notamment des rayonnements solaires, dans la chambre de calcination à travers la fenêtre transparente.

Selon un mode de mise en oeuvre, le moyen d'extraction comprend une vanne d'extraction, un conduit d'extraction sur lequel est disposé une pompe d'extraction, le conduit d'extraction reliant la chambre de calcination et le moyen de stockage.

Selon un mode de mise en oeuvre, un échangeur de chaleur est intercalé entre la pompe d'extraction et le moyen de stockage, l'échangeur de chaleur étant configuré pour chauffer un fluide d'échange par échange de chaleur avec le dioxyde de carbone extrait de la chambre de calcination.

Selon un mode de mise en oeuvre, ladite installation comprend également un module de préchauffage destiné à préchauffer, à partir du fluide d'échange chauffé dans l'échangeur de chaleur, l'espèce intermédiaire formée dans la chambre de calcination et l'autre espèce.

Selon un mode de mise en oeuvre, le moyen de pompage comprend une pompe reliée à la chambre de calcination par un conduit de pompage, ledit conduit de pompage étant pourvu d'une vanne de pompage.

Selon un mode de mise en oeuvre, ladite installation comprend en outre une unité de valorisation du dioxyde de carbone extrait lors de la calcination carbonate, l'unité de valorisation étant configurée pour transformer le dioxyde de carbone en un produit intermédiaire.

### BREVE DESCRIPTION DES DESSINS

D'autres caractéristiques et avantages de l'invention ressortiront de la description détaillée d'un procédé de formation d'un produit final à partir de carbonate d'alcalin ou d'alcalino-terreux et d'une autre espèce selon la présente invention qui va suivre en référence aux figures annexées sur lesquelles :
[Fig.1] La figure 1 est une représentation schématique d'une installation susceptible d'être mise en oeuvre pour la formation d'un produit final à partir de carbonate d'alcalin ou d'alcalino-terreux et d'une autre espèce selon la présente invention ;
[Fig.2] La figure 2 est une représentation schématique de l'étape a) du procédé de formation d'un produit final selon la présente invention ;
[Fig.3] La figure 3 est une représentation schématique des étapes a), b), et c) du procédé de formation d'un produit final selon la présente invention.

### DESCRIPTION DETAILLEE DE L'INVENTION

La présente invention concerne un procédé de formation d'un produit final à partir de carbonate d'un carbonate d'alcalin ou d'alcalino-terreux et d'une autre espèce. En particulier, le procédé selon la présente invention propose de calciner le d'un carbonate d'alcalin ou d'alcalino-terreux, dit carbonate, dans une chambre de calcination dans laquelle l'atmosphère gazeuse est préalablement établie à une pression faible et notamment inférieure à 1 Atm, voir inférieure à 0,1 Atm.

Par ailleurs, l'énergie thermique nécessaire à la calcination du carbonate est apportée par une source radiative, notamment un rayonnement lumineux, à travers une fenêtre transparente ménagée dans la chambre de calcination. En d'autres termes, le chauffage lors de la calcination du carbonate se fait sans apport de matière.

Ainsi, la combinaison d'une atmosphère contrôlée et d'un chauffage sans apport de matière permet de former du dioxyde de carbone exempt d'impuretés et donc plus facilement valorisable.

En d'autres termes la présente invention ne vise pas un procédé limitant la production de dioxyde de carbone, mais plutôt de produire du dioxyde de carbone relativement exempt d'impuretés de manière à en faciliter la valorisation et/ou séquestration.

En particulier, le dioxyde de carbone ainsi formé peut être, du fait de sa pureté, utilisé comme gaz réfrigérant, ou valorisé en tant que réactif dans le cadre de procédés de synthèse organique, ou encore comme nourriture pour les algues.

L'invention n'est toutefois pas limitée à ces seules applications, et l'homme du métier, sur la base de ses connaissances générales, pourra imaginer tout autre type d'applications.

La suite de la description sera limitée à la calcination d'un carbonate de calcium et notamment pour la formation d'un clinker de ciment. Plus particulièrement, la suite de la description se rapporte à la formation d'un clinker de ciment à partir de carbonate de calcium et d'argile. Toutefois, l'homme du métier pourra adapter la présente invention à la formation d'un produit final (différent du clinker de ciment) impliquant la calcination d'un carbonate d'alcalin (par exemple Na₂CO₃, K₂CO₃) ou d'un carbonate d'alcalino-terreux (MgCO₃, ou un mélange MgCO₃/CaCO₃).

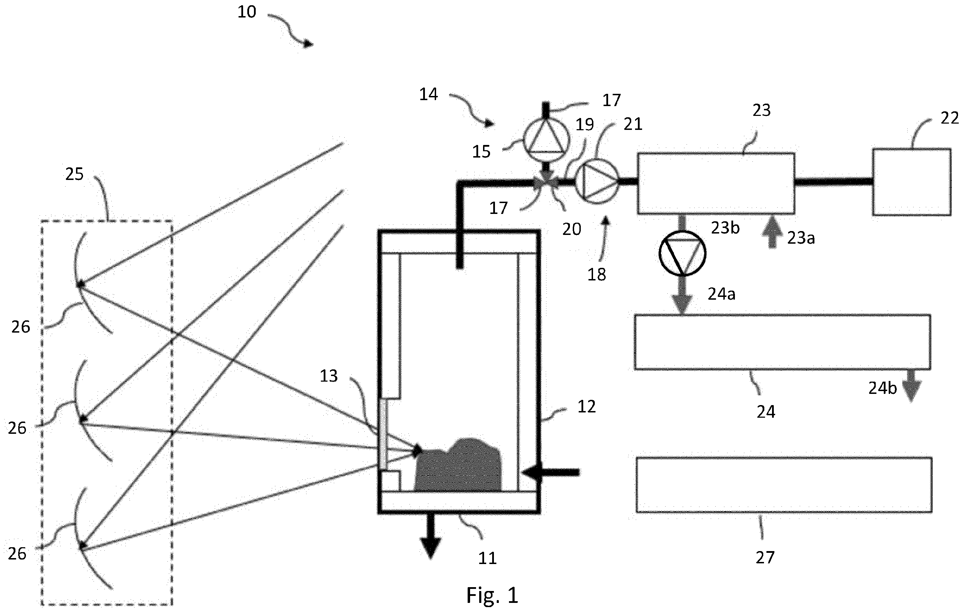

La figure 1 représente une installation 10 convenant à la mise en œuvre d'un procédé de formation d'un produit final à partir de carbonate de calcium et d'une autre espèce.

L'installation représentée à la figure 1 comprend une chambre de calcination 11 susceptible d'être mise en oeuvre pour la calcination de calcaire (carbonatede calcium) en oxyde de calcium et en dioxyde de carbone.

En particulier, la chambre de calcination 11 est formée de briques réfractaires 12 et est pourvue d'une fenêtre 13. Les briques réfractaires 12 peuvent avantageusement être configurées pour absorber un rayonnement lumineux de manière à permettre le chauffage d'un volume intérieur de la chambre de calcination 10, plus particulièrement, les briques réfractaires 12 peuvent être de couleur sombre, par exemple brune ou grise.

La fenêtre 13 est transparente aux rayonnements visibles et ultraviolets, et peut comprendre, sur sa surface intérieure, un traitement opacifiant aux rayonnements infrarouges (par rayonnement infrarouge, on entend un rayonnement dont la ou les longueurs d'onde sont supérieures à 700 nm).

L'installation 10 comprend également un moyen de pompage 14 configuré pour extraire, en partie, l'atmosphère gazeuse dans la chambre de calcination de manière à maintenir la pression gazeuse dans ladite chambre de calcination à une pression inférieure à 1 atmosphère, avantageusement inférieure à 0,1 atmosphère, encore plus avantageusement inférieure à 0,05 atmosphère. Notamment, le moyen de pompage 14 comprend une pompe 15 reliée à la chambre de calcination 11 par un conduit de pompage, ledit conduit de pompage 16 étant pourvu d'une vanne de pompage 17.

L'installation 10 comprend également un moyen d'extraction 18 configuré pour extraire le dioxyde de carbone formé lors de la calcination du calcaire dans la chambre de calcination.

Le moyen d'extraction 18 peut comprendre un conduit d'extraction 19, une vanne d'extraction 20, et une pompe d'extraction 21. Le moyen d'extraction 18 peut relier la chambre de calcination 11 et un moyen de stockage 22. Le moyen de stockage 22, par exemple un réservoir, est notamment adapté pour stocker le dioxyde de carbone susceptible d'être formé dans la chambre de calcination 11.

L'installation 10 peut comprendre un échangeur de chaleur 23 intercalé entre la pompe d'extraction 18 et le moyen de stockage 22. L'échangeur de chaleur 23 est notamment configuré pour permettre un échange de chaleur entre le dioxyde de carbone extrait de la chambre de calcination et un fluide d'échange. En particulier, cet échange de chaleur permet d'imposer une augmentation de température au fluide d'échange. A cet égard, l'échangeur de chaleur 23 comprend un conduit de circulation du fluide d'échange reliant une entrée 23a et une sortie 23b, dans lequel du fluide d'échange peut circuler et être chauffé par échange thermique avec le dioxyde de carbone extrait de la chambre de calcination 11.

L'installation 10 peut également comprendre un module de préchauffage 24 destiné à préchauffer l'oxyde de calcium formé dans la chambre de calcination, et/ou le mélange formé par l'oxyde de calcium et l'argile. Le module de préchauffage 24 est pourvu d'une entrée 24a et d'une sortie 24b reliées par un conduit de circulation dudit module 24. Plus particulièrement, le module de préchauffage 24 est agencé pour que le fluide d'échange chauffé dans l'échangeur de chaleur 23 et sortant par la sortie 23b dudit échangeur 23 soit injecté dans le module de préchauffage 24 par l'entrée 24a et en ressorte par la sortie 24b. Cette circulation permet ainsi d'assurer un préchauffage des matières premières destinées à former le clinker de ciment.

L'installation comprend également un moyen de chauffage 25 radiatif configuré pour apporter l'énergie nécessaire à la calcination de calcaire à travers la fenêtre transparente.

En particulier, le moyen de chauffage peut comprendre au moins un miroir réflectif 26 agencé pour concentrer un rayonnement lumineux à l'intérieur de la chambre de calcination 11.

Plus particulièrement, l'au moins un miroir réflexif 26 est parabolique et est agencé pour concentrer le rayonnement solaire à l'intérieur de la chambre de calcination 11. Le moyen de chauffage 25 est, à cet égard, configuré pour permettre la calcination du calcaire en oxyde de calcium et en dioxyde de carbone dans le volume intérieur de la chambre de calcination. Plus particulièrement, le moyen de chauffage 25 est configuré pour permettre un chauffage à une température comprise entre 800°C et 1000°C dans la chambre de calcination.

Enfin, l'installation 10 comprend un four rotatif 27 configuré pour permettre la formation d'un clinker de ciment à partir d'oxyde de calcium et d'argile.

L'installation 10 selon la présente invention, et notamment la chambre de calcination 11, permet la formation de dioxyde de carbone relativement exempt d'impuretés et donc directement valorisable. En effet, l'agencement proposé permet de limiter la présence de contaminants dans le dioxyde de carbone susceptible d'être formé lors de la calcination du calcaire, et ainsi d'en faciliter la valorisation.

La présente invention concerne également un procédé de formation d'un produit final à partir de carbonate de calcium et d'une autre espèce. Le procédé peut notamment être mis en oeuvre au moyen de l'installation décrite ci-avant.

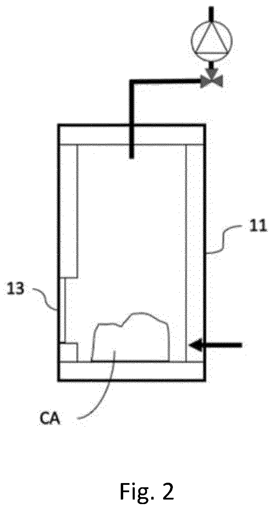

En particulier, et tel qu'illustré à la figure 2, le procédé comprend une étape a) qui comprend la disposition de calcaire CA dans la chambre de calcination 11 et l'extraction, au moins partielle, de l'atmosphère gazeuse dans ladite chambre de calcination 11 de manière à maintenir la pression gazeuse dans ladite chambre de calcination à une pression inférieure à 1 atmosphère, avantageusement inférieure à 0,1 atmosphère, encore plus avantageusement inférieure à 0,05 atmosphère. Lexécution de l'étape a) peut notamment mettre en oeuvre l'ouverture de la vanne de pompage 17 et le démarrage de la pompe 15.

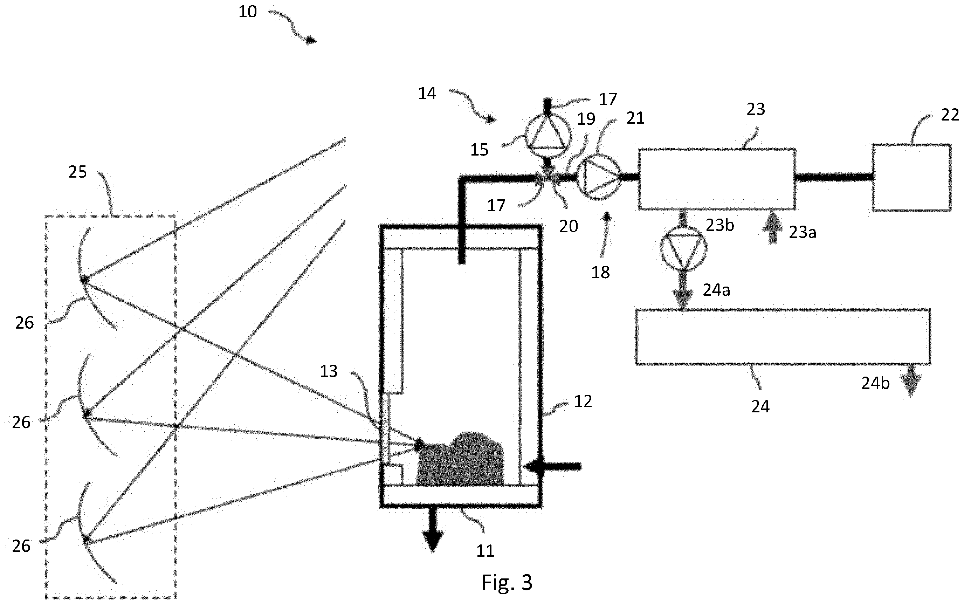

Tel qu'illustré à la figure 3, le procédé comprend également une étape b) de traitement thermique du carbonate de calcium CA afin de le transformer en oxyde de calcium et en dioxyde de carbone. Notamment, ce traitement thermique est exécuté de sorte que la température dans le volume intérieur de la chambre de calcination atteigne une température supérieure à 800°C et avantageusement inférieure à 1000°C.

Si d'autres carbonates devaient être considérés, la température de calcination pourrait être différente. Par exemple la calcination du MgCO₃ peut être mise en oeuvre à partir de 400°C, et avantageusement à une température inférieure à 600°C.

De manière avantageuse, l'étape a) peut se poursuivre après le démarrage de l'étape b) et tant que la température dans la chambre de calcination 11 reste inférieure à une température prédéterminée, avantageusement la température prédéterminée est comprise entre 300°C et 500°C, encore plus avantageusement la température prédéterminée est comprise entre 350°C et 450°C. Toujours de manière avantageuse, l'étape a) peut prendre fin dès lors que la température dans la chambre de calcination est supérieure à la température prédéterminée. Notamment, l'étape a) peut être stoppée par fermeture de la vanne de pompage 17 et arrêt de la pompe 15.

Le procédé selon la présente invention comprend une étape c) d'extraction du dioxyde de carbone produit lors de l'exécution de l'étape b) (figure 3). De manière avantageuse, l'étape c) débute lors de l'exécution de l'étape b) et dès que la température dans la chambre de calcination est supérieure à la température prédéterminée.

L'exécution de l'étape c) peut, à cet égard, comprendre l'ouverture de la vanne d'extraction 20 et le démarrage de la pompe d'extraction 21.

Le dioxyde de carbone extrait lors de l'étape c) peut être stocké ou transformé en un produit de valorisation.

De manière avantageuse, le dioxyde de carbone extrait de la chambre de calcination est injecté, avant son stockage, dans l'échangeur de chaleur afin de chauffer, par échange de chaleur, un fluide d'échange. Ainsi, le fluide d'échange chauffé peut être injecté dans le module de préchauffage afin de préchauffer l'oxyde de calcium formé dans la chambre de calcination et l'autre espèce.

Le procédé selon la présente invention comprend également une étape d) qui comprend le mélange de l'oxyde de calcium et de l'autre espèce afin de former le produit final.

L'étape d) peut être suivie d'une étape e) de traitement thermique final du mélange exécuté à une température comprise entre 1000°C et 1600°C.

Selon un mode de réalisation particulier, l'autre espèce comprend de l'argile et le produit final comprend un clinker de ciment.

Bien sûr, l'invention n'est pas limitée aux modes de réalisation décrits et on peut y apporter des variantes de réalisation sans sortir du cadre de l'invention tel que défini par les revendications.

## Revendications

1. Procédé de formation d'un produit final à partir de carbonate d'alcalin ou d'alcalino-terreux, dit carbonate, et d'une autre espèce, dans lequel le carbonate comprend du carbonate de calcium de sorte que l'espèce intermédiaire comprend de l'oxyde de calcium et l'autre espèce comprend de l'argile, le procédé comprenant les étapes suivantes :
b) un traitement thermique du carbonate, dans une chambre de calcination (11), destiné à calciner ledit carbonate en oxyde d'alcalin ou d'alcaline terreux, dit espèce intermédiaire, et en dioxyde de carbone ;
c) une étape d'extraction du dioxyde de carbone produit lors de l'exécution de l'étape b) ;
d) une étape finale qui comprend le mélange de l'espèce intermédiaire et de l'autre espèce afin de former le produit final ;
**le procédé étant caractérisé en ce que** le traitement thermique est précédé d'une étape a) de pompage de l'atmosphère gazeuse dans la chambre de calcination (11) de manière à maintenir la pression gazeuse dans ladite chambre de calcination (11) à une pression inférieure à 1 atmosphère, avantageusement inférieure à 0,1 atmosphère, encore plus avantageusement inférieure à 0,05 atmosphère, et **en ce que** l'énergie nécessaire à l'exécution de l'étape b) est apportée par une source radiative à travers une fenêtre de la chambre de calcination (11),
dans lequel l'étape a) est poursuivie après le démarrage de l'étape b) et tant que la température dans la chambre de calcination (11) reste inférieure à une température prédéterminée, la température prédéterminée est comprise entre 200°C et 600°C, plus avantageusement la température prédéterminée est comprise entre 300°C et 500°C,
dans lequel l'étape a) prend fin dès lors que la température dans la chambre de calcination (11) est supérieure à la température prédéterminée.

2. Procédé selon la revendication 1, dans lequel l'étape c) débute lors de l'exécution de l'étape b) et dès que la température dans la chambre de calcination (11) est supérieure à la température prédéterminée.

3. Procédé selon l'une des revendications 1 à 2, dans lequel le dioxyde de carbone extrait lors de l'étape c) est stocké ou transformé en un produit de valorisation.

4. Procédé selon l'une des revendications 1 à 3, dans lequel l'apport d'énergie par la source radiative comprend la concentration, par au moins un miroir réfléchissant (26) et à concentration, d'un rayonnement lumineux, notamment un rayonnement solaire, en direction de la chambre de calcination (11).

5. Procédé selon l'une des revendications 1 à 4, dans lequel la calcination du carbonate au cours de l'étape b) est exécutée à une température comprise entre 400°C et 1000°C, avantageusement entre 800°C et 1000°C.

6. Procédé selon l'une des revendications 1 à 5, dans lequel le produit final comprend un clinker de ciment.

7. Procédé selon l'une des revendications 1 à 6, dans lequel l'étape d) est suivie d'une étape e) de traitement thermique final du mélange, le traitement thermique final étant exécuté à une température comprise entre 1000°C et 1600°C.

8. Procédé selon l'une des revendications 1 à 7, dans lequel le dioxyde de carbone extrait de la chambre de calcination (11) est injecté, avant son stockage, dans un échangeur de chaleur afin de chauffer, par échange de chaleur, un fluide d'échange, avantageusement, le fluide d'échange chauffé est injecté dans un module de préchauffage destiné à préchauffer l'oxyde de calcium formé dans la chambre de calcination (11) et l'autre espèce.

## Patentansprüche

1. Verfahren zum Ausbilden eines Endprodukts aus Alkali- oder Erdalkalicarbonat, Carbonat genannt, und einer anderen Spezies, wobei das Carbonat Calciumcarbonat umfasst, sodass die Zwischenspezies Calciumoxid umfasst und die andere Spezies Ton umfasst, das Verfahren umfassend die folgenden Schritte:
b) Wärmebehandeln des Carbonats in einer Calcinationskammer (11), die dazu bestimmt ist, das Carbonat zu Alkali- oder Erdalkalioxid, Zwischenspezies genannt, und zu Kohlendioxid zu calcinieren;
c) einen Schritt zum Extrahieren des Kohlendioxids, das während der Ausführung von Schritt b) produziert wird;
d) einen Endschritt, der das Mischen der Zwischenspezies und der anderen Spezies umfasst, um das Endprodukt auszubilden;
wobei das Verfahren **dadurch gekennzeichnet ist, dass** dem Wärmebehandeln ein Schritt a) eines Pumpens der gasförmigen Atmosphäre in die Calcinationskammer (11) vorangeht, um den Gasdruck in der Calcinationskammer (11) auf einem Druck von weniger als 1 Atmosphäre zu halten, vorteilhaft weniger als 0,1 Atmosphäre, noch vorteilhafter weniger als 0,05 Atmosphäre, und **dass** die Energie, die für die Ausführung des Schritts b) erforderlich ist, durch eine Strahlungsquelle durch ein Fenster der Calcinationskammer (11) herbeigeschafft wird,
wobei der Schritt a) nach dem Beginn von Schritt b) fortgesetzt wird und solange die Temperatur in der Calcinationskammer (11) unter einer vorgegebenen Temperatur bleibt, wobei die vorgegebene Temperatur zwischen 200 °C und 600 °C liegt, vorteilhafter die vorgegebene Temperatur zwischen 300 °C und 500 °C liegt,
wobei der Schritt a) endet, wenn die Temperatur in der Calcinationskammer (11) höher als die vorgegebene Temperatur ist.

2. Verfahren nach Anspruch 1, wobei der Schritt c) während der Ausführung von Schritt b) anfängt und sobald die Temperatur in der Calcinationskammer (11) höher als die vorgegebene Temperatur ist.

3. Verfahren nach einem der Ansprüche 1 bis 2, wobei das Kohlendioxid, das in Schritt c) extrahiert wird, gespeichert oder in ein Wiederverwertungsprodukt umgewandelt wird.

4. Verfahren nach einem der Ansprüche 1 bis 3, wobei das Herbeischaffen der Energie durch die Strahlungsquelle die Konzentration, durch mindestens einen Reflexions- und Konzentrationsspiegel (26), einer Lichtstrahlung, insbesondere einer Sonnenstrahlung, in Richtung der Calcinationskammer (11) umfasst.

5. Verfahren nach einem der Ansprüche 1 bis 4, wobei die Calcination des Carbonats im Lauf von Schritt b) bei einer Temperatur zwischen 400 °C und 1000 °C, vorteilhaft zwischen 800 °C und 1000 °C, ausgeführt wird.

6. Verfahren nach einem der Ansprüche 1 bis 5, wobei das Endprodukt einen Zementklinker umfasst.

7. Verfahren nach einem der Ansprüche 1 bis 6, wobei auf Schritt d) ein Schritt e) der Endwärmebehandlung der Mischung folgt, wobei die Endwärmebehandlung bei einer Temperatur zwischen 1000 °C und 1600 °C ausgeführt wird.

8. Verfahren nach einem der Ansprüche 1 bis 7, wobei das Kohlendioxid, das aus der Calcinationskammer (11) extrahiert wird, vor seiner Speicherung in einen Wärmetauscher eingespritzt wird, um durch Wärmeaustausch ein Austauschfluid zu erhitzen, vorteilhaft wobei das erhitzte Austauschfluid in ein Vorerhitzungsmodul eingespritzt wird, das dazu bestimmt ist, das Calciumoxid, das in der Calcinationskammer (11) ausgebildet wird, und die andere Spezies vorzuerhitzen.

## Claims

1. Method for forming a final product from alkali carbonate or alkaline earth carbonate, referred to as carbonate, and another species, wherein the carbonate comprises calcium carbonate such that the intermediate species comprises calcium oxide and the other species comprises clay, the method comprising the following steps:
b) heat treatment of the carbonate, in a calcination chamber (11), which is intended to calcinate said carbonate into alkali oxide or alkaline earth oxide, referred to as the intermediate species, and carbon dioxide;
c) a step of extracting the carbon dioxide produced during step b);
d) a final step which comprises mixing the intermediate species and the other species to form the final product;
**the method being characterized in that** the heat treatment is preceded by a step a) of pumping the gaseous atmosphere into the calcination chamber (11) so as to maintain the gas pressure in said calcination chamber (11) at a pressure of less than 1 atmosphere, advantageously of less than 0.1 atmosphere, more advantageously of less than 0.05 atmosphere, and **in that** the energy required to carry out step b) is supplied by a radiative source through a window in the calcination chamber (11),
wherein step a) is continued after the start of step b) and for as long as the temperature in the calcination chamber (11) remains below a predetermined temperature, said predetermined temperature being between 200°C and 600°C, more advantageously said predetermined temperature being between 300°C and 500°C,
wherein step a) ends as soon as the temperature in the calcination chamber (11) exceeds the predetermined temperature.

2. Method according to claim 1, wherein step c) begins while step b) is being carried out and as soon as the temperature in the calcination chamber (11) exceeds the predetermined temperature.

3. Method according to one of claims 1 to 2, wherein the carbon dioxide extracted in step c) is stored or converted into a usable product.

4. Method according to one of claims 1 to 3, wherein the supply of energy by the radiative source comprises the concentration of light radiation, in particular solar radiation, in the direction of the calcination chamber (11) by means of at least one reflecting and concentrating mirror (26).

5. Method according to one of claims 1 to 4, wherein the calcination of the carbonate during step b) is carried out at a temperature of between 400°C and 1000°C, advantageously between 800°C and 1000°C.

6. Method according to one of claims 1 to 5, wherein the final product comprises cement clinker.

7. Method according to one of claims 1 to 6, wherein step d) is followed by a step e) of final heat treatment of the mixture, the final heat treatment being carried out at a temperature of between 1000°C and 1600°C.

8. Method according to one of claims 1 to 7, wherein the carbon dioxide extracted from the calcination chamber (11) is injected, prior to storage, into a heat exchanger in order to heat an exchange fluid by means of heat exchange, advantageously, and the heated exchange fluid is injected into a preheating module which is intended to preheat the calcium oxide formed in the calcination chamber (11) and the other species.
